## Europäisches Patentamt
## European Patent Office
## Office européen des brevets

(19)

(11) Numéro de publication: **0 300 925**
**B1**

(12) **FASCICULE DE BREVET EUROPEEN**

(45) Date de publication du fascicule du brevet: **02.01.91**

(51) Int. Cl.⁵: **C 10 B 53/02**

(21) Numéro de dépôt: **88401934.0**

(22) Date de dépôt: **25.07.88**

(54) Installation de production de charbon de bois.

(30) Priorité: **24.07.87 FR 8710540**

(43) Date de publication de la demande:
**25.01.89 Bulletin 89/04**

(45) Mention de la délivrance du brevet:
**02.01.91 Bulletin 91/01**

(84) Etats contractants désignés:
**BE DE ES IT**

(56) Documents cités:
**FR-A- 883 470**
**US-A-4 280 878**

(73) Titulaire: **Devallet, André**
**7, rue Bayard**
**F-75008 Paris (FR)**

(72) Inventeur: **Devallet, André**
**7, rue Bayard**
**F-75008 Paris (FR)**

(74) Mandataire: **Faber, Jean-Paul**
**CABINET FABER 35, rue de Berne**
**F-75008 Paris (FR)**

EP 0 300 925 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention vise une installation de production de charbon de bois.

L'invention se rapporte à une installation dans laquelle on utilise des fours à incinération qui peuvent être déplacés, par exemple, à l'aide d'un chariot élévateur.

De préférence, mais non exclusivement l'installation prévoit l'utilisation de fours qui permettent l'arrivée d'air comburant par le haut et l'évacuation des vapeurs et fumées par la partie inférieure.

On sait, que lors de la phase de carbonisation dans un four il se dégage des vapeurs pyroligneuses, des goudrons, brais, huiles, acides acétiques etc. qui ont un pouvoir calorifique important et qui sont également polluants.

On sait, également qu'il est préférable avant la carbonisation de procéder à une déshydratation, même partielle du bois.

L'un des buts de la présente invention est de réaliser une installation rationnelle de production de charbon de bois qui permet d'éviter le dégagement de vapeurs polluantes et également de procéder à un séchage du bois à carboniser.

L'installation, selon l'invention est du type comprenant une ligne de fours de carbonisation, reliés par une gaîne à un four d'incinération avec interposition d'un ventilateur, la sortie du four d'incinération étant reliée à une ligne de fours de séchage du bois à carboniser et est caractérisée en ce que les fours des lignes de carbonisation et de séchage sont identiques et du type comportant à la partie supérieure un manchon d'arrivée d'air comburant et à la partie inférieure une douille d'évacuation des fumées et vapeurs, lesdits fours étant agencés de manière à pouvoir être transportés et, l'installation comprenant une première gaîne pourvue de dérivations destinées à être reliées, chacune d'une manière amovible, à la douille d'un four d'une ligne de fours en action de carbonisation, et reliée au four d'incinération et une conduite pourvue de dérivations reliées, chacune, d'une manière amovible, à un manchon d'un four d'une ligne de fours remplis de bois destiné à être séché avant carbonisation, les douilles des fours de la ligne de séchage étant reliées à une conduite débouchant dans une cheminée.

Ainsi grâce à l'invention on utilise les vapeurs produites par la combustion et qui sont surchauffées pour déshydrater le bois à carboniser, les gaz rejetés à l'extérieur étant non polluants et ne contenant que de la vapeur d'eau, du gaz carbonique et de l'oxygène. De plus, une telle installation permet un gain de temps très important puisque les fours de la linge de séchage après carbonisation du bois des fours de la ligne de carbonisation remplacent directement ceux-ci.

Suivant une autre caractéristique, l'installation comprend un filtre inséré entre la conduite reliée aux douilles des fours de la ligne de séchage et la cheminée.

Suivant un détail constructif, le filtre est un filtre hydraulique comprenant une bâche remplie d'eau, une pompe aspirant l'eau de la bâche et la refoulant à travers une rampe de pulvérisation dans une capacité reliée à la bâche et dans la partie inférieure de laquelle débouche la conduite, tandis que sa partie supérieure est reliée à la cheminée.

Suivant encore une caractéristique constructive, le four à incinération comprend un brûleur, un ventilateur et une trémie destinée à être remplie de poussière de charbon de bois. Ainsi dans le four à incinération les vapeurs pyroligneuses sont complètement brûlées, la température étant voisine de 900°C.

Suivant encore une autre caractéristique, le ventilateur est placé entre le four à incinération, la conduite pourvue de dérivations destinées à être reliées aux manchons des fours de la ligne de séchage et il est prévu une conduite s'ouvrant, d'une part, à l'extérieur et d'autre par, du côté de l'aspiration du ventilateur.

Grâce à cette caractéristique, on dilue la vapeur surchauffée et on abaisse la température de celle-ci à la sortie du four et on peut, dans le cas où l'installation est située dans un local extraire l'air vicié de celui-ci et réaliser ainsi la ventilation des locaux.

Enfin, l'installation comprend une aire de stockage du bois à carboniser, une aire de remplissage des fours au moins une ligne de carbonisation et au moins une ligne correspondante de séchage, une aire de refroidissement des fours après carbonisation et au moins un poste de vidage des fours.

On réalise ainsi une installation permettant une bonne productivité.

L'invention va maintenant être décrite avec plus de détails en se référant à un mode de réalisation particulier donné à titre d'exemple seulement et représenté aux dessins annexés, dans lesquels:

Figure 1 montre en plan l'implantation générale de l'installation selon l'invention.

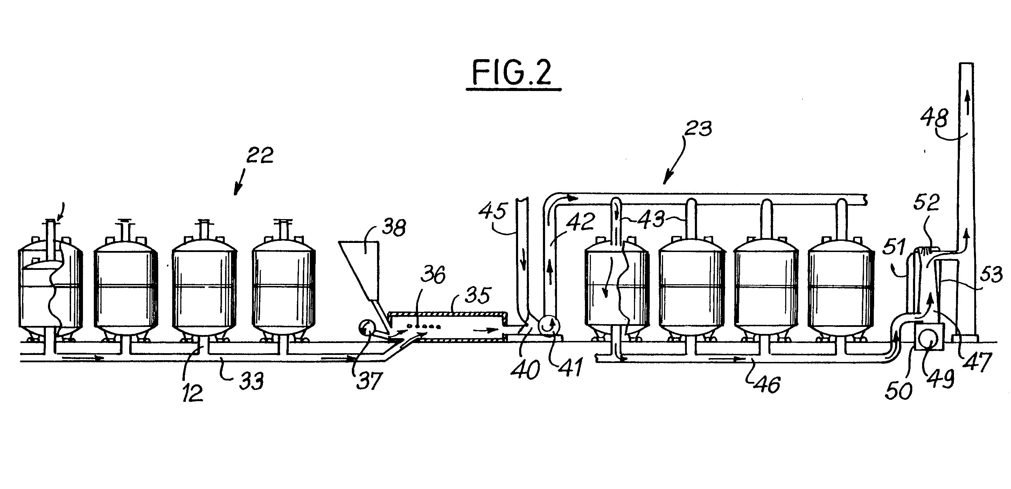

Figure 2 montre schématiquement en coupe une ligne de carbonisation et la ligne de séchage à laquelle elle est reliée.

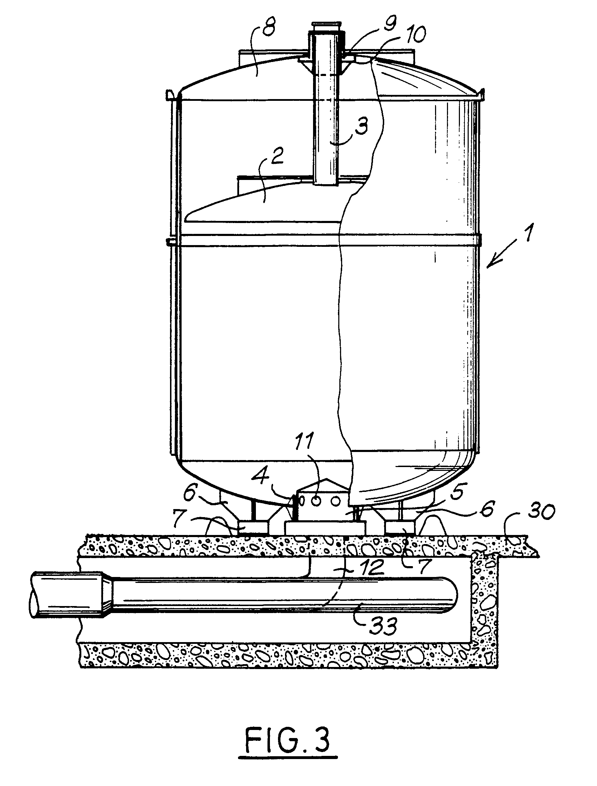

Figure 3 est une vue en élévation partiellement en coupe montrant un four d'une ligne de carbonisation.

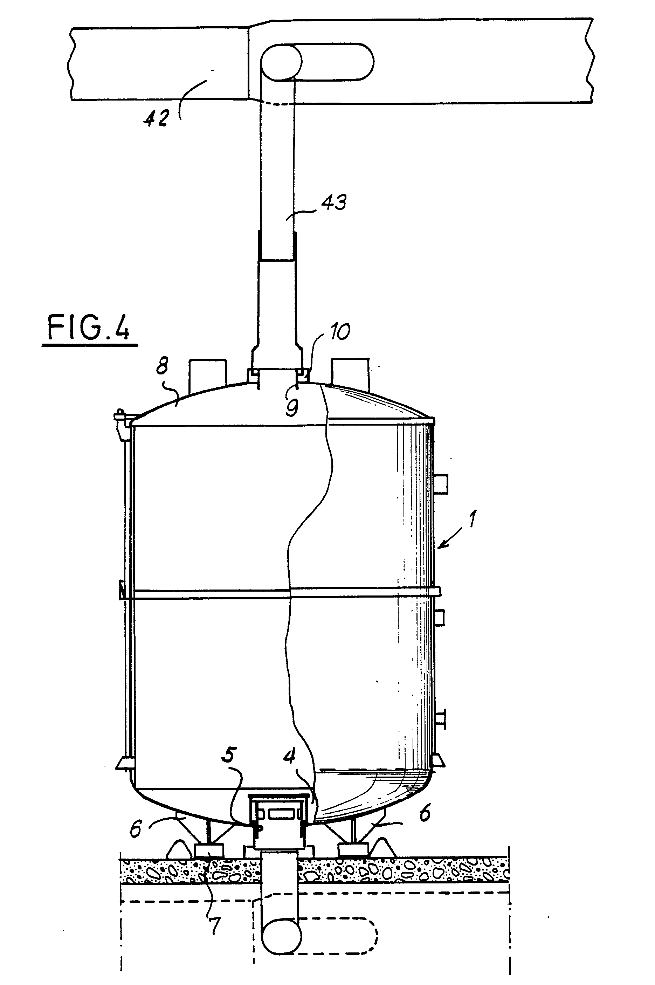

Figure 4 est une vue en élévation partiellement en coupe montrant une four d'une ligne de séchage.

Les fours utilisés correspondant, de préférence aux fours comprenant un corps 1 supporté par des pieds 6 munis de partins 7 pour la prise par la fourche d'un chariot élévateur. La partie supérieure du corps 1 est fermée par un couvercle 8 avec un manchon 9 dans lequel est guidée une cheminée 3 reliée à une cloche 2 mobile dans ledit corps 1.

Le manchon 9 est bordé par un canal circulaire 10 destiné à être rempli de sable et la partie inférieure du corps 1 comporte un conduit central 4 pourvu d'une douille 5 percée de trous 11 et permettant de relier le four à une gaine 12.

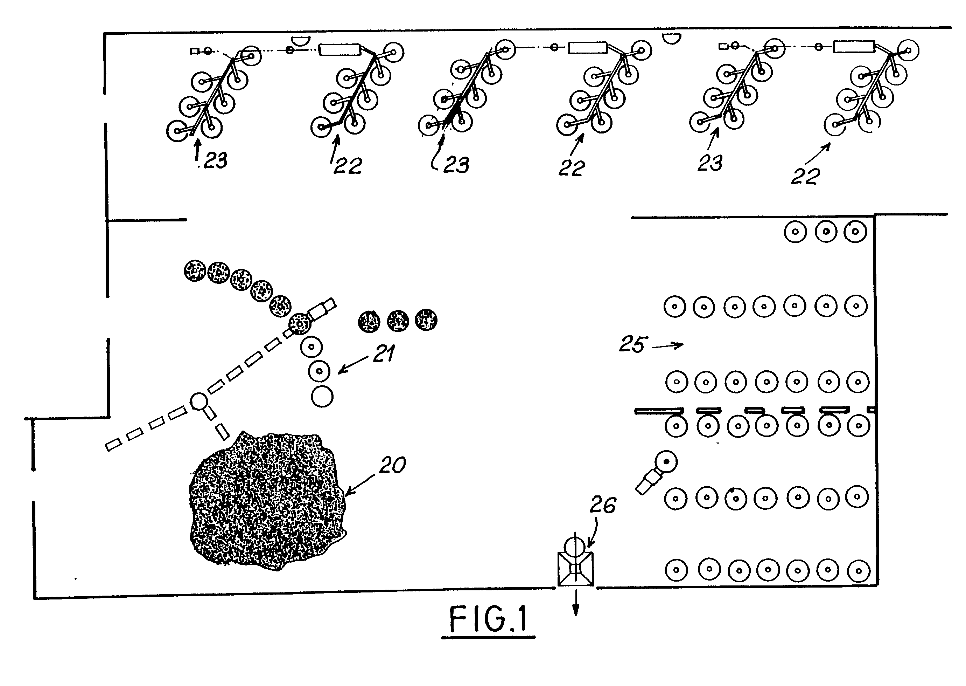

La figure 1 montre l'implantation générale d'une installation de production de charbon de bois et qui comprend une aire de stockage du bois 20, une aire de remplissage 21 des fours, trois lignes 22 de carbonisation, trois lignes correspondantes 23 de séchage, une aire de refroidissement 25 où les fours sont stockés après carbonisation et un poste 26 où les fours sont vidés après refroidissement et où le charbon de bois est acheminé vers une chaîne d'ensachage.

Chaque ligne de carbonisation 22 comprend une dalle de béton 30 sur laquelle reposent en épi des fours de carbonisation 1 ceux-ci étant par des gaines latérales 12 reliés à une gaine centrale 33 disposée en dessous de la dalle de béton 30.

Les fours de la ligne de carbonisation 22 sont donc en dépression et l'air comburant est aspiré à travers des ouvertures de la cheminée 3, le bois étant allumé sous la cloche 2, les fumées, vapeurs pyroligneuses etc. étant aspirées dans les gaines 12 et 33 à travers les ouvertures 11 de la douille 5.

La gaine 33 est reliée à un four à incinération 35 qui comprend un brûleur 36, un ventilateur 37 et une trémie 38 remplie de poussière de charbon de bois. Le ventilateur 36 fournit l'air nécessaire à la combustion dans le four 35 en même temps qu'il amène dans ce dernier de la poussière de charbon de bois destinée à favoriser le brûlage des vapeurs pyroligneuses et à faire monter la température dans le four.

La sortie du four à incinération 35 est reliée par une conduite 40 à l'aspiration d'un ventilateur 41 dont le refoulement débouche dans une conduite 42 sur laquelle sont branchées des dérivations 43 qui viennent coiffer les manchons 9 des fours de la ligne de séchage et dont le bord libre s'insère dans le sable des canaux 10.

Sur la conduite 40 est branchée une conduite 45 qui étant ainsi reliée à l'aspiration du ventilateur 41 permet d'aspirer l'air ambiant pour extraire l'air vicié du local et ainsi permettre le renouvellement de l'air et la ventilation des locaux. La conduite 45 permet également de diluer la vapeur surchauffée sortant du four 35 et d'abaisser la température de celle-ci.

Afin de permettre un séchage efficace du bois contenu dans les fours de la ligne de séchage, la cloche 2 n'est pas montée dans ceux-ci, la vapeur surchaffée qui est à une température de l'ordre de 170°C est envoyée par les manchons 9 dans les fours de la ligne de séchage traverse le bois et ressort par les trous 11 des douilles 5, celles-ci étant reliées à une gaine 46 disposée sous la dalle de béton 30.

Il est important que la vapeur surchaffée ne dépasse pas une température de l'ordre de 170°C afin d'éviter les inflammations spontanées du bois.

Dans la gaine 46 circule une vapeur dont la température oscille entre 100°C et 150°C, celle-ci traversant un filtre hydraulique 47 avant d'être évacuée à l'extérieur par une cheminée 48.

Le filtre hydraulique comprend une pompe 49 qui aspire l'eau dans une bâche 50 et refoule celle-ci dans un tuyau 51 terminé par une rampe 52 qui envoie l'eau sous forme de gouttelettes dans la partie supérieure d'une capacité 53 reliée à la bâche 50 et reliée d'une part à la gaine 46 et, d'autre part, à la cheminée 48.

Le filtre hydraulique 47 permet de laver les gaz avant la sortie dans l'atmosphère et de retenir les particules en suspension.

Une telle installation permet une production rationnelle, n'est pas polluante et offre de grands avantages de productivité.

Le schéma de la figure 1 permet de bien comprendre l'intérêt de l'installation. Les fours sont remplis de bois puis avec un chariot élévateur ils sont transportés à une ligne de séchage 23. Là ils sont branchés aux dérivations 43. Préalablement les fours de la ligne de séchage 23 ont été déplacés avec un chariot élévateur et placés sur la ligne de carbonisation 22, les cloches 2 ayant été mises en place, puis, les fours de la ligne de carbonisation 22 sont allumés et on utilise les vapeurs surchauffées pour sécher le bois des fours de la ligne de séchage comme déjà exposé plus haut. En fin de carbonisation les cloches 2 assurent l'étouffement des fours de la ligne de carbonisation, ceux-ci étant alors transportés depuis la ligne de carbonisation à l'aire 25 de refroidissement. Lorsqu'ils sont refroidis les fours sont vidés au poste 26.

Bien entendu, l'invention n'est pas limitée au mode de réalisation qui vient d'être décrit en représenté. On pourra y apporter de nombreuses modifications de détail sans sortir pour cela du cadre de l'invention.

**Revendications**

1. Installation de production de charbon de bois du type comprenant une ligne de fours de carbonisation, reliés par une gaîne à un four d'incinération avec interposition d'un ventilateur, la sortie du four d'incinération étant reliée à une ligne de fours de séchage du bois à carboniser caractérisée en ce que les fours des lignes de carbonisation et de séchage sont identiques et du type comportant à la partie supérieure un manchon (9) d'arrivée d'air comburant et à la partie inférieure une douille (5) d'évacuation des fumées et vapeurs, lesdits fours étant agencés de manière à pouvoir être transportés et, l'installation comprenant une première gaîne (33) pourvue de dérivations (12) detinées à être reliées, chacun d'une manière amovible, à la douille (5) d'un four d'une ligne (22) de fours en action de carbonisation, et reliée au four d'incinération (35) et une conduite (42) pourvue de dérivations (43) reliées, chacune, d'une manière amovible, à un manchon (9) d'un four d'une ligne (23) de fours (1) remplis de bois destiné à être séché avant carbonisation, les douilles (5) des fours de la ligne de séchage (23) étant reliées à une conduite (46) débouchant dans une cheminée (48).

2. Installation de production de charbon de bois, selon la revendication 1, caractérisée en ce qu'elle comprend un filtre (47) inséré entre la conduite (46) reliée aux douilles (5) des fours de la ligne de séchage et la cheminée.

3. Installation de production de charbon de bois, selon la revendication 1, caractérisée en ce que le filtre (47) est un filtre hydraulique comprenant une bâche (50) remplie d'eau, une pompe aspirant l'eau de la bâche et la refoulant à travers une rampe de pulvérisation (52) dans une capacité (53) reliée à la bâche (50) et dans la partie inférieure de laquelle débouche la conduite (46), tandis que sa partie supérieure est reliée à la cheminée (48).

4. Installation de production de charbon de bois, selon la revendication 1, caractérisée en ce que le four à incinération (35) comprend un brûleur, un ventilateur (37) et une trémie (38) destinée à être remplie de poussière de charbon de bois.

5. Installation de production de charbon de bois, selon la revendication 1, caractérisée en ce que le ventilateur (41) est placé entre le four à incinération (35) la conduite (42) pourvue de dérivations (43) destinées à être reliées aux manchons des fours de la ligne de séchage (23) et il est prévu une conduite (45) s'ouvrant, d'une part, à l'extérieur et d'autre part, du côté de l'aspiration du ventilateur (41).

6. Installation de production de charbon de bois, selon la revendication 1, caractérisée en ce qu'elle comprend une aire de stockage (20) du bois à carboniser, une aire (21) de remplissage des fours au moins une ligne (22) de carbonisation, et au moins une ligne correspondante de séchage (23), une aire (25) de refroidissement des fours après carbonisation et au moins un poste (26) de vidage des fours.

**Patentansprüche**

1. Anlage zur Erzeugung von Holzkohle, mit in Linie angeordneten Kohlungsöfen, die über eine Leitung, bei Zwischenschaltung eines Gebläses, mit einem Verbrennungsofen verbunden sind, dessen Ausgang mit in Linie angeordneten Öfen zur Trocknung von zu verkohlendem Holz verbunden ist, dadurch gekennzeichnet, daß die in Linie angeordneten Öfen für Kohlung und Trocknung gleich sind und an ihrer Oberseite eine Muffe (9) für die Zufuhr von Verbrennungsluft und an ihrer Unterseite einen Auslaß (5) für die Abfuhr von Rauchgasen und Dämpfen besitzen, daß die genannten Öfen derart ausgebildet sind, daß sie transportierbar sind, und daß die Anlage eine erste Leitung (33) aufweist, die Zweigleitungen (12) hat, von denen jede dazu bestimmt ist, in lösbarer Weise mit einem Auslaß je eines der in Linie (22) angeordneten Öfen des Kohlungsvorganges verbunden zu sein, und die mit einem Verbrennungsofen (35) verbunden ist, wobei eine Leitung (42) mit Abzweigleitungen (43) versehen ist, von denen jede in lösbarer Weise mit einer Muffe (9) eines der in Linie (23) angeordneten Öfen (1) verbunden ist, die mit Holz gefüllt sind, das vor der Kohlung zur Trocknung ansteht, und daß die Auslässe (5) der in Linie (23) angeordneten Öfen für die Trocknung mit einer Leitung (46) verbunden sind, die in einen Kamin (48) mündet.

2. Anlage zur Erzeugung von Holzkohle nach Anspruch 1, dadurch gekennzeichnet, daß sie ein Filter (47) aufweist, das zwischen die mit den Auslässen (5) der in Linie angeordneten Öfen für die Trocknung verbundene Leitung (46) und einem Kamin eingebaut ist.

3. Anlage zur Erzeugung von Holzkohle nach Anspruch 1, dadurch gekennzeichnet, daß das Filter (47) ein Hydrofilter mit einem mit Wasser gefüllten Behälter (50) ist, daß eine Pumpe das Wasser des Behälters ansaugt und über eine Zerstäuberrampe (52) in einen mit dem Behälter (50) verbundenen Raum (53) fördert, in dessen unterem Bereich die Leitung (46) einmündet und dessen oberer Bereich mit dem Kamin (48) in Verbindung ist.

4. Anlage zur Erzeugung von Holzkohle nach Anspruch 1, dadurch gekennzeichnet, daß der Verbrennungsofen (35) einen Brenner, ein Gebläse (37) und einen Fülltrichter (38) aufweist, der für eine Füllung mit Holzkohlenstaub vorgesehen ist.

5. Anlage zur Erzeugung von Holzkohle nach Anspruch 1, dadurch gekennzeichnet, daß das Gebläse (41) zwischen dem Verbrennungsofen (35) und der Leitung (42) angeordnet ist, die mit den Abzweigleitungen (43) versehen ist, die mit den Muffen der zur Trocknung vorgesehen Öfen der Linie (23) verbunden sind, und daß eine Leitung (45) vorgesehen ist, die einerseits ins Freie und andererseits in die Saugseite des Gebläses (41) mündet.

6. Anlage zur Erzeugung von Holzkohle nach Anspruch 1, dadurch gekennzeichnet, daß sie eine Lagerfläche (20) für zu verkohlendes Holz, einen Platz zum Befüllen der Öfen, zumindest eine Linie (22) von Öfen für die Kohlung und zumindest eine entsprechende Linie (23) von Öfen für die Trocknung, einen Platz (25) zum Abkühlen der Öfen nach dem Kohlungsvorgang und zumindest eine Station (26) zum Entleeren der Öfen aufweist.

**Claims**

1. An installation for the production of wood charcoal, of the type comprising a line of carbonization ovens connected by a flue to an incineration oven with the interposition of a fan, the outlet from the incineration oven being connected to a line of ovens for drying the wood to be carbonized, characterized in that the ovens from the carbonization and drying lines are identical and of the type having in the upper part a combustion air inlet collar (9) and in the lower part a smoke and steam discharge socket (5), the said ovens being arranged to be transportable, and the installation including a first flue (33) which is provided with branches (12) each intended for being detachably connected to the socket (5) of one oven of a line (22) of ovens operating in the carbonization mode, and is connected to the incineration oven (35), and a duct (42) provided with branches (43) each detachably connected to the collar (9) of one oven of a line (23) of ovens (1) filled with wood destined to be dried before carbonization, the sockets (5) of the ovens in the drying line (23) being connected to a duct (46) opening out into a chimney (48).

2. An installation for the production of wood charcoal, as in Claim 1, characterized in that it includes a filter (47) inserted between the duct (46) connected to the sockets (5) of the ovens in the drying line, and the chimney.

3. An installation for the production of wood charcoal, as in Claim 1, characterized in that the filter (47) is a hydraulic filter comprising a tank filled with water, with a pump drawing the water from the tank and delivering it through a row of atomizers (52) into a chamber (53) connected to the tank (50), the duct (46) opening out into the lower part of the said chamber whilst the upper part of it is connected to the chimney (48).

4. An installation for the production of wood charcoal, as in Claim 1, characterized in that the incineration oven (35) comprises a burner, a fan (37) and a hopper (38) intended for being filled with wood charcoal dust.

5. An installation for the production of wood charcoal, as in Claim 1, characterized in that the fan (41) is placed between the incineration oven (35) and the duct (42) provided with branches (43) intended for being connected to the collars of the ovens of the drying line (23), and a duct (45) is provided which opens at one end to the outside and at the other to the suction side of the fan (41).

6. An installation for the production of wood charcoal, as in Claim 1, characterized in that it includes an area (20) for storage of the wood to be carbonized, an area (21) for filling the ovens, at least one carbonization line (22) and at least one corresponding drying line (23), an area (25) for cooling the ovens after carbonization and at least one oven-emptying station (26).

FIG.1

## FIG.2

EP 0 300 925 B1

FIG.3

EP 0 300 925 B1

FIG.4

4